**Europäisches Patentamt**

**European Patent Office**

**Office européen des brevets**

(19)

(11) Numéro de publication : **0 512 892 B1**

## (12) FASCICULE DE BREVET EUROPEEN

(45) Date de publication du fascicule du brevet :
**15.11.95 Bulletin 95/46**

(51) Int. Cl.⁶ : **G11B 7/00,** G11B 7/14, G11B 7/12

(21) Numéro de dépôt : **92401213.1**

(22) Date de dépôt : **29.04.92**

(54) **Procédé de lecture des informations contenues dans un disque optique.**

(30) Priorité : **07.05.91 FR 9105605**

(43) Date de publication de la demande :
**11.11.92 Bulletin 92/46**

(45) Mention de la délivrance du brevet :
**15.11.95 Bulletin 95/46**

(84) Etats contractants désignés :
**DE GB NL**

(56) Documents cités :
**EP-A- 0 011 990**
**EP-A- 0 304 932**
**EP-A- 0 414 380**
**US-A- 4 445 209**
**US-A- 4 530 080**
**US-A- 4 845 529**
**PATENT ABSTRACTS OF JAPAN vol. 15, no. 274 (P-1226)11 Juillet 1991 & JP-A-3 093045 (CANON INC. )18Avril 1991**

(73) Titulaire : **THOMSON-CSF**
**173, Boulevard Haussmann**
**F-75008 Paris (FR)**

(72) Inventeur : **Refregier, Philippe**
**Thomson-CSF,**
**SCPI - Cédex 67**
**F-92045 Paris La Défense (FR)**
Inventeur : **Loiseaux, Brigitte**
**Thomson-CSF,**
**SCPI - Cédex 67**
**F-92045 Paris La Défense (FR)**
Inventeur : **Huignard, Jean-Pierre**
**Thomson-CSF,**
**SCPI - Cédex 67**
**F-92045 Paris La Défense (FR)**

(74) Mandataire : **Taboureau, James et al**
**THOMSON-CSF,**
**SCPI,**
**B.P. 329,**
**50, rue Jean-Pierre Timbaud**
**F-92402 Courbevoie Cédex (FR)**

## Description

PROCEDE DE LECTURE DES INFORMATIONS CONTENUES DANS UN DISQUE OPTIQUE.

L'invention concerne un procédé de lecture des informations enregistrées dans une mémoire optique à haute densité, comportant plusieurs niveaux d'informations. L'un des objets de l'invention est d'améliorer le rapport signal/bruit afin de diminuer le taux d'erreur à la lecture.

Un système qui permet une capacité de stockage très élevée dans un disque optique numérique est exposé dans la demande de brevet français n° 90 07284 déposée le 12 juin 1990 au nom de la Demanderesse, et intitulé" Stockage optique d'informations en strates superposées. " Dans ce système, afin d'augmenter le nombre d'informations enregistrées par rapport aux mémoires optiques classiques, les informations sont codées, en bits, sous forme de variation locale d'indice de réfraction, ou de variation locale du taux d'absorption - ce qui en soi est connu - mais sur plusieurs niveaux dans le volume du disque optique en matériau transparent, et non plus seulement en surface, comme cela est connu. Il s'agit donc d'un système d'enregistrement tridimensionnel constitué de plusieurs plans dans l'épaisseur du disque.

La lecture des informations stockées, sur plusieurs niveaux se fait par vole optique, par diffraction ou absorption d'un faisceau de lumière, et la nécessité d'avoir une faible profondeur de champ, pour ne lire qu'un niveau à la fois, entraîne que l'ouverture du faisceau lumineux soit grande, et par voie de conséquence le faisceau lumineux balaye également des informations contenues dans des plans supérieurs et inférieurs à celui qui est lu. Les bits parasites, même s'ils diffractent peu, entraînent un bruit de fond Important, et un mauvais rapport signal sur bruit.

C'est à cet inconvénient que l'invention apporte une solution. Elle consiste à moduler la position du point de focalisation du faisceau de lecture, et à réaliser une détection à la fréquence de modulation. La modulation de position peut être parallèle au plan de lecture, ou perpendiculaire : dans les deux cas, seul le bit voisin du point de focalisation du faisceau de lecture - donc le bit utile pour la lecture- voit sa puissance diffractée varier de manière importante, tandis que les bits parasites produisent globalement la même puissance en bruit de fond. Le balayage de la position du bit utile par un faisceau modulé entraîne que le signal extrait est un signal périodique.

La notion de balayage de la position d'un bit, inscrit dans un disque optique, par un faisceau de lecture optique, par un faisceau de lecture optique est en soi connue. Par exemple, le brevet US-A-4 445 209, qui est réfléchi dans le préambule de la première revendication, décrit un moyen de corriger la position de focalisation du faisceau de lecture, lorsque le plan de stockage des bits à lire varie selon la fabrication du disque. Dans ce cas, un élément piézoélectrique transparent fait varier le chemin optique, ce qui permet de balayer la position du bit à lire.

Un autre exemple est donné par le brevet EP-A-0 414 380, en vue de corriger les différences d'épaisseurs des disques optiques lus par un même lecteur; mais dans ce cas, la correction de la focalisation sur un bit est obtenue par une modification de la longueur d'onde du faisceau lumineux.

Ces procédés de lecture, avec balayage, ne concernent pas la suppression du bruit de fond engendré par les couches inscrites voisines de la couche lue.

De façon plus précise, l'invention concerne un procédé de lecture des informations contenues dans un disque optique, sous forme de bits sur un niveau par balayage avec un faisceau lumineux, ledit faisceau étant concentré à ce niveau et ayant le point de focalisation modulé autour des bits à lire, ce procédé étant caractérisé en ce que le point de focalisation du faisceau lumineux est modulé autour de la position de chaque bit à lire dans le disque optique en matériau transparent avec une fréquence telle que chaque bit à lire fournit un signal de lecture périodique.

L'invention sera mieux comprise par la description plus détaillée qui en est faite maintenant, en conjonction avec les figures jointes en annexe, qui représentent :

- figure 1 : vue en coupe d'un disque de mémoire optique dans lequel l'inscription est faite en volume ; c'est à ce type de mémoire qu'est appliqué le procédé de lecture selon l'invention,
- figure 2 : schéma de principe du procédé de lecture selon l'invention,
- figure 3 : schéma simplifié du procédé de modulation du faisceau de lecture, selon l'invention,
- figures 4 et 5 : courbes comparatives de la puissance recueillie à la lecture, sans modulation et avec modulation du faisceau de lecture.

Le procédé de lecture selon l'invention peut s'appliquer aux mémoires bidimensionnelles - c'est à dire à tous les disques optiques actuellement connus dans lesquels l'inscription est uniquement en surface - mais aussi aux mémoires tridimensionnelles, révélées par la demande de brevet citée plus haut. C'est dans ce dernier cas que le procédé de lecture prend tout son intérêt. Il peut également s'appliquer aux cas d'inscription par variation d'indice de réfraction ou par variation d'absorption de lumière, et aux cas de lecture par réflexion, par diffraction ou par transmission. Afin d'être plus claire et plus concise, l'invention sera exposée en s'appuyant sur le cas d'un enregistrement tridimensionnel, par variation d'indice de réfraction, avec lecture par diffraction.

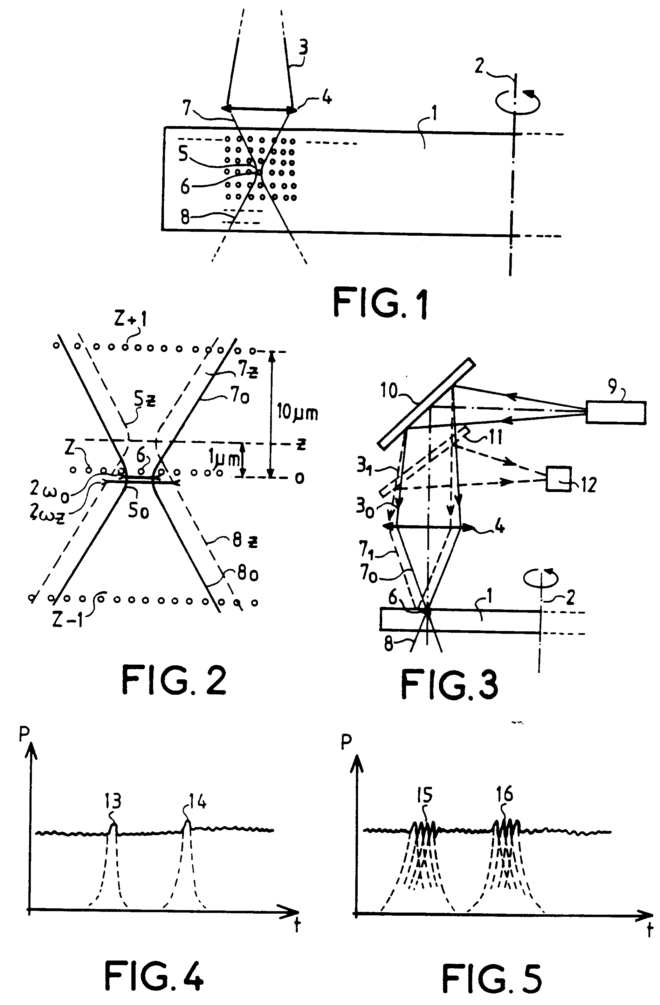

La figure 1 représente la coupe de la moitié d'un disque optique 1, animé d'un mouvement de rotation autour de son axe 2. Un très grand nombre - plusieurs milliards - d'informations y ont été inscrites, en plusieurs strates, dans le sens de l'épaisseur du disque sous forme de bits, petits domaines à l'intérieur desquels l'indice de réfraction varie par rapport à celui de la matrice, qui est un matériau photopolymère. Au cours de l'inscription d'un bit, au moyen d'un laser, la variation locale d'Indice peut atteindre quelques $10^{-2}$ en relatif.

La lecture se fait au moyen d'un faisceau optique 3, focalisé sur le bit à lire, dans le niveau lu, par une lentille 4. On considèrera que les niveaux d'inscriptions sont écartés de 10 micromètres, entre eux, et que le niveau lu se trouve parmi les niveaux internes, dans le volume du disque optique. La nécessité d'avoir un point de focalisation 5 petit, c'est à dire une très petite profondeur de champ, entraîne une grande ouverture du faisceau lumineux.

Par voie de conséquence, le faisceau optique de lecture qui doit lire un bit repéré 6 éclaire dans sa partie convergente 7 - en deçà du point de focalisation 5 - un grand nombre de bits, qui provoquent par diffraction parasite un bruit de fond important, d'autant plus important que l'enregistrement est à haute densité.

Le rapport signal/bruit devient de plus en plus mauvais avec l'augmentation du nombre de bits enregistrés, conséquence directe de la diffraction de la lumière sur les bits des plans supérieurs et inférieurs à celui sur lequel se fait la lecture.

La solution proposée par l'invention consiste à moduler la position du point de focalisation, c'est à dire balayer la zone de lecture, et à réaliser une détection à la fréquence de modulation. Le nombre de bits parasites varie peu au cours de ce balayage local, et le bruit de fond reste sensiblement constant parce que la puissance diffractée reste sensiblement constante. Au contraire, pour le bit lu, la puissance diffractée varie de tout - le point de focalisation est précisément sur le bit - à presque rien - le point de focalisation modulé est à côté du bit -. Cette variation importante se traduit par un signal répétitif, à la fréquence de modulation, que l'on sait bien extraire d'un bruit de fond.

Quelques chiffres permettront de fixer des ordres de grandeur. Avec les disques optiques actuels, l'ouverture du faisceau lumineux est de l'ordre de 60 ° et le rayon du point de focalisation 5 est de l'ordre de $1/1.10^{-6}$ m : pour une épaisseur 1 mm dans le disque optique, et avec des plans d'enregistrements distants de 10 μm, le nombre de bits parasites est N = $10^4$.

Un ordre de grandeur convenable pour le débit de lecture compatible avec les applications nécessitant des capacités importantes d'enregistrement - du type TVHD- se situe entre 20 et 200 M. bit/s. Si par exemple 100 pistes sont lues en parallèle, chaque piste est lue à un débit compris entre 0,2 et 2 Mbit/s. Pour que le gain en puissance du rapport signal/bruit soit de 100, il faut que la fréquence de modulation soit comprise entre 20 et 200 MHz.

La figure 2 est un agrandissement de la région de lecture d'un bit 6 et elle permettra de mieux comprendre le phénomène.

Aux échelles microniques considérées, le faisceau lumineux 7-8 n'est pas rectiligne, mais se présente comme une gaussienne : ce que l'on appelle le point de focalisation est en fait une zône de rétrécissement 5, souvent désignée par son nom anglais "waist".

Sur cette figure sont représentés trois niveaux de bits, identifiés Z-1, Z, Z+1. Le niveau central Z est celui qui contient le bit 6 à lire, et il est éloigné d'environ 10 micromètres de chacun des niveaux Z-1 et Z+1.

En traits pleins est figuré le faisceau de lecture $7_o + 8_o$, en position qu'on appellera "normale", soit sans modulation. Le bit 6 à lire, au niveau d'origine 0, est parfaitement repéré par le waist $5_o$, dont le diamètre est $2\omega_o$ : la réfraction du bit 6 est maximale.

En traits pointillés est figuré le faisceau de lecture $7_z + 8_z$, dans une position de modulation "verticale", sur une élongation z. On considérera qu'est "verticale" une modulation selon un axe perpendiculaire au plan du bit de lecture, au dessus ou en dessous de ce plan. Le waist est en position $5_z$, dans le plan d'ordonnée z, et le faisceau de lecture 7z + 8 z n'est plus focalisé sur le bit 6 à lire, et celui-ci n'est plus qu'un point par rapport à la section, de diamètre 2 ωz, du faisceau dans le plan de lecture Z. Pour les chiffres qui ont été cités plus haut, et pour une focale de la lentille 4 f = 1 cm, on trouve qu'une modulation verticale z = 1 μm entraîne

$$\omega_z = 2\omega_o$$

Si l'optique de lecture 4 est une lentille sphérique, en lecture point à point, ou bit par bit, la puissance diffractée par le bit 6 est 4 fois plus faible en position modulée ($2\omega_z$) qu'en position normale ($2\omega_o$).

Si l'optique de lecture 4 est une lentille cylindrique, disposée selon un rayon du disque 1, en lecture par ligne, la puissance diffractée par le bit 6 est 2 fois plus faible en position modulée qu'en position normale.

Par contre, pour le plan juste supérieur Z + 1 (ou inférieur Z - 1) au plan de lecture Z, distant de 10 μm, la variation relative du faisceau de lecture pour une modulation de 1 μm, est :

$$\frac{\Delta\omega_z}{\omega_z} = 0,1$$

Soit une modulation de 0,01 pour une lecture point à point, ou 0,1 pour une lecture par ligne, ce qui devient rapidement négligeable pour les plans supérieurs ou inférieurs Z + 2, Z +3.....Z + n.

En effet, on peut considérer que, lorsqu'il y a modulation verticale, le nombre de bits parasites acquis par l'augmentation de diamètre du faisceau $8_z$, au niveau Z-1, sur la figure 2, est sensiblement équilibré par le nombre de bits parasites perdu, par la diminution de diamètre du faisceau $7_z$, au niveau $Z + 1$ ou inversement : le bruit de fond reste à peu près constant.

Cette modulation verticale présente l'intérêt de ne pas balayer horizontalement le niveau d'informations en cours de lecture, et est donc compatible avec une plus haute densité d'intégration, par niveaux.

Pour une optique 4 de focale 1 cm, soit $10^{-2}$ m, une modulation de 1 micron, soit $10^{-6}$m, correspond à une modulation relative égale à $10^{-4}$.

La figure 2 illustre l'exemple d'une modulation verticale : il est aisé de concevoir la même figure pour une modulation horizontale, dans laquelle le waist 5 est modulé, dans le niveau Z, de part et d'autre du bit 6, à lire. Dans ce cas, la puissance diffractée par les bits des plans supérieurs et inférieurs est toujours la même -statistiquement, le nombre de bits parasites reste constant au cours du balayage -tandis que la puissance du bit 6 à lire varie du tout au rien. La figure 3 représente un cas de modulation horizontale.

La position du waist 5, pour balayer la zône de lecture, peut être modulée par plusieurs méthodes, dont les plus souples consistent à moduler la longueur d'onde du laser de lecture.

Par exemple, pour la modulation horizontale, la figure 3 montre un laser 9 qui émet un faisceau que l'on fait diffracter sur un réseau ou un hologramme 10. Le faisceau diffracté 3 est focalisé par une optique 4 sur le bit 6, à lire, dans un niveau de lecture Z du disque optique 1. Un changement de longueur d'onde du laser 9 engendre un changement de direction de pointé après diffraction sur le réseau 10 : à une fréquence fo correspond un faisceau $3_o + 7_o$, pointé sur le bit 6, et à une fréquence $f_1$ correspond un faisceau $3_1 + 7_1$, pointé à côté du bit 6. On a donc réalisé une modulation horizontale.

La modulation verticale peut être obtenue avec une technique analogue et la figure 3 reste valable dans son principe, à ceci près que 10 est un miroir normal, et on utilise en 4 une lentille holographique. Avec une telle lentille, la distance focale est proportionnelle à la longueur d'onde du laser 9. En faisant varier cette longueur d'onde, d'une variation relative de l'ordre de $10^{-4}$, on crée une modulation verticale du faisceau de lecture autour du bit 6.

La présente invention concerne un système de lecture optique, et il n'a été question jusqu'à présent que de lasers, qui sont des émetteurs mais pas des capteurs. En fait, la lecture proprement dite d'un signal optique diffracté, ou transmis, appartient à l'art connu, et peut se faire, par exemple, au moyen d'un miroir semi-transparent 11 qui renvoie la lumière sur une photodiode 12.

Les figures 4 et 5 sont des comparaisons entre les formes de signaux de sortie du lecteur 12, sans modulation du faisceau de lecture 7, et avec modulation selon l'invention. La puissance diffractée P est donnée en fonction du temps t. Sans modulation, il est difficile d'extraire sans erreur les signaux des deux bits 13 et 14, donnés à titre d'exemple en figure 4, parce que le bruit de fond est important. Avec modulation, en figure 5, même si le bruit de fond est de même importance, il reste aléatoire, tandis que les signaux 15 et 16 des deux mêmes bits que précédemment sont devenus des signaux périodiques, de type sinusoïdaux , qui ont la fréquence de la modulation, et dont l'extraction est beaucoup plus facile que dans le cas précédent : la lecture se fait à la fréquence de modulation.

La présente invention est essentiellement liée à la lecture des mémoires optiques sur disques à structure stratifiée, pour la télévision à haute définition par exemple.

## Revendications

1. Procédé de lecture des informations contenues dans un disque optique (1) sous forme de bits (6) sur un niveau par balayage avec un faisceau lumineux (7), ledit faisceau étant concentré à ce niveau et ayant le point de focalisation modulé autour des bits à lire, ce procédé étant caractérisé en ce que le point de focalisation du faisceau lumineux (7) est modulé autour de la position de chaque bit à lire dans le disque optique en matériau transparent avec une fréquence telle que chaque bit à lire (6) fournit un signal de lecture (15, 16) périodique.

2. Procédé selon la revendication 1 caractérisé en ce que les informations sont enregistrées dans le disque optique (1) sous forme de domaines (6) à variation d'indice de réfraction ou variation d'absorption en volume.

3. Procédé selon la revendication 1 caractérisé en ce que les informations sont enregistrées dans le disque optique (1) sous forme de niveaux (Z-1, Z, Z+1) stratifiés dans le volume du disque.

4. Procédé selon la revendication 1 caractérisé en ce que la modulation du faisceau de lecture (7) est un balayage, parallèlement au plan d'un niveau d'informations, autour de la position de chaque bit à lire (6).

5. Procédé selon la revendication 1 caractérisé en ce que la modulation du faisceau de lecture (7) est un balayage, perpendiculairement au plan d'un niveau d'informations, autour de la position de chaque bit à lire (6).

6. Procédé selon la revendication 1 caractérisé en ce que la modulation de position du faisceau de

lecture ($7_o$, $7_z$) est obtenue par une modulation de la longueur d'onde de la lumière utilisée pour la lecture.

7. Procédé selon la revendication 1 caractérisé en ce que la modulation de position ($7_o$, $7_z$) du faisceau autour de chaque bit à lire (6) fournit un signal de lecture (15,16) périodique, dans un bruit de fond apériodique.

**Patentansprüche**

1. Verfahren zum Lesen von in einer optischen Scheibe (1) in Form von Bits (6) auf einer Höhe enthaltenen Informationen durch Abtasten mittels eines Lichtstrahlenbündels (7), wobei das Strahlenbündel auf diese Höhe konzentriert ist und den Brennpunkt um die zu lesenden Bits moduliert hat, wobei das Verfahren dadurch gekennzeichnet ist, daß der Brennpunkt des Lichtstrahlenbündels (7) um die Position jedes in der optischen Scheibe aus lichtdurchlässigem Material zu lesenden Bits mit einer solchen Frequenz moduliert ist, daß jedes zu lesende Bit (6) ein periodisches Lesesignal (15, 16) liefert.

2. Verfahren nach Anspruch 1, dadurch gekennzeichnet, daß die Informationen in der optischen Scheibe (1) in Form von Bereichen (6) mit variierendem Brechungsindex oder variierender Volumenabsorption gespeichert sind.

3. Verfahren nach Anspruch 1, dadurch gekennzeichnet, daß die Informationen in der optischen Scheibe (1) in Form von geschichteten Niveaus (Z-1, Z, Z+1) im Volumen der Scheibe gespeichert sind.

4. Verfahren nach Anspruch 1, dadurch gekennzeichnet, daß die Modulation des Lesestrahlenbündels (7) eine Ablenkung parallel zur Ebene eines Informationsniveaus um die Position jedes zu lesenden Bits (6) ist.

5. Verfahren nach Anspruch 1, dadurch gekennzeichnet, daß die Modulation des Lesestrahlenbündels (7) eine Ablenkung senkrecht zur Ebene eines Informationsniveaus um die Position jedes zu lesenden Bits (6) ist.

6. Verfahren nach Anspruch 1, dadurch gekennzeichnet, daß die Modulation der Position des Lesestrahlenbündels ($7_o$, $7_z$) durch eine Modulation der Wellenlänge des zum Lesen verwendeten Lichts erhalten wird.

7. Verfahren nach Anspruch 1, dadurch gekennzeichnet, daß die Modulation der Position ($7_o$, $7_z$) des Strahlenbündels um jedes zu lesende Bit (6) ein periodisches Lesesignal (15, 16) in einem aperiodischen Grundrauschen liefert.

**Claims**

1. Method for reading data contained in an optical disc (1) in the form of bits (6) on a level by scanning with a light beam (7), the said beam being concentrated at this level and having the point of focusing modulated about the bits to be read, this method being characterized in that the point of focusing of the light beam (7) is modulated about the position of each bit to be read from the optical disc, made from a transparent material, with a frequency such that each bit to be read (6) delivers a periodic reading signal (15,16).

2. Method according to Claim 1 characterized in that the data are recorded in the optical disc (1) in the form of domains (6) having variation of refractive index or variation of volume absorption.

3. Method according to Claim 1 characterized in that the data are recorded in the optical disc (1) in the form of levels (Z-1, Z, Z+1) stratified through the volume of the disc.

4. Method according to Claim 1 characterized in that the modulation of the reading beam (7) is a scan, parallel to the plane of a data level, about the position of each bit to be read (6).

5. Method according to Claim 1 characterized in that the modulation of the reading beam (7) is a scan, perpendicular to the plane of a data level, about the position of each bit to be read (6).

6. Method according to Claim 1 characterized in that the position modulation of the reading beam ($7_o$, $7_z$) is obtained by modulation of the wavelength of the light used for reading.

7. Method according to Claim 1 characterized in that the position modulation ($7_o$, $7_z$) of the beam about each bit to be read (6) delivers a periodic reading signal (15, 16) in aperiodic background noise.

FIG. 1

FIG. 2

FIG. 3

FIG. 4

FIG. 5